Europäisches Patentamt

European Patent Office

Office européen des brevets

(11) Publication number: 0 507 967 A1

# EUROPEAN PATENT APPLICATION
## published in accordance with Art. 158(3) EPC

(21) Application number: 91920790.2

(22) Date of filing: 30.10.91

(86) International application number: PCT/SU91/00219

(87) International publication number: WO 92/07728 (14.05.92 92/11)

(51) Int. Cl.5: B60K 7/00, B60L 9/02

(30) Priority: 31.10.90 SU 4878645
31.10.90 SU 4879047
31.10.90 SU 4879048

(43) Date of publication of application:
14.10.92 Bulletin 92/42

(84) Designated Contracting States:
AT BE CH DE DK ES FR GB GR IT LI LU NL SE

(71) Applicant: SHKONDIN, Vasily Vasilievich
Puschino, AB-6-91
Moscovskaya obl., 142292(SU)
Applicant: MOLCHANOV, Konstantin
Vladimirovich
ul. Trifonovskaya, 11-240
Moscow, 127018(SU)

(72) Inventor: SHKONDIN, Vasily Vasilievich
Puschino, AB-6-91
Moscovskaya obl., 142292(SU)
Inventor: MOLCHANOV, Konstantin
Vladimirovich
ul. Trifonovskaya, 11-240
Moscow, 127018(SU)

(74) Representative: Godwin, Edgar James
MARKS & CLERK 57-60 Lincoln's Inn Fields
London, WC2A 3LS(GB)

(54) MOTOR-WHEEL OF A TRANSPORT VEHICLE.

(57) A motor-wheel comprises an axle (1), a rim (2) mounted rotatably about the axle (1), a voltage control unit (32) and an electric motor comprising a stator (4) secured on the axle (1) and provided with a magnetic circuit (5) with electromagnets (6, 7) arranged in two groups, and a rotor (10) connected to the rim (2) and provided with a magnetic circuit (11) with magnetic elements (12), current collectors (8 and 9) and a distributing collector (13). The groups of the electromagnets (6 and 7) are mutually offset so that when the current collecting elements (17, 18 or 19, 20) of the current collector (8 or 9) corresponding to one of the groups of electromagnets (6 or 7) are situated between the plates (14, 15) of the distributing collector (13) the electromagnets (6 or 7) of that group are disconnected from the voltage control unit (32), whereas the electromagnets (7 or 6) of the other group are electrically connected, through a contact element (21), the current collecting elements (19, 20 or 17, 18) and the plates (14, 15) of the distributing collector (13), to the voltage control unit (32) and are magnetically interconnected with the magnetic elements (12) of the rotor, thus providing for rotation of the rim (2), while the axes (43) of the electromagnets (7 or 6) of that said group are situated between the axes (44) of the magnetic elements (12) of the rotor (10).

FIG. 1

## Engineering Field

The invention relates to motors for vehicle movers and, more particularly, the invention relates to a motorized wheel, which can be used as a drive for electric bikes, invalid vehicles, wheeled chairs, factory shop transport, electric cars, battery-operated tractors and trucks, mini electric buses, various battery-operated carriages and rollers.

## Prior Art

The prior art designs of motorized wheels, as a rule, are systems including an electric motor whose torque is mechanically transmitted to a wheel through a reduction gear or an axle.

Widely used in practice are motorized wheels provided with a reduction gear and a high-speed induction motor characterized by a good power gain (SU, A, 910480). These motorized wheels, compared to internal combustion engines, are ecologically harmless, reliable and economical but need a reduction gear and a high-voltage power supply.

Much more promising are reducer-free motorized wheels, in which the wheel is rotated due to electro-magnetic interaction of the magnetic systems of the stator and rotor (SU, A, 628008), having a rim and an axle with a built-in asynchronous electric machine. The electric motor is made in the form of a disk-shaped induction motor whose stator, together with the magnetic circuit, windings and current conductors is secured on a stationary axle of the wheel, while the rotor with a squirrel-cage winding and magnetic circuits disposed at both sides of the stator form a wheel capable of rotating relative to the stator. Mounted on the rotor is a pneumatic tyre or another appliance.

Such a motorized wheel features high reliability due to the absence of a mechanical reduction gear and effective cooling of the stator and rotor by a cooling of the stator and rotor by a cooling medium passing through the radial passages in the stator coupled with inlet and outlet pipe branches made in the stationary axle, as well due the presence of radial cavities in the rotor.

However, the prior art motorized wheels employing such a unit as an induction motor is characterized by low reliability and efficiency, high heat release due to the residual field intensity in the magnetic circuit and the E.M.F. effects, poor regulation properties, a complex control system and use a controlled high-voltage power supply having insufficient longevity. The prior art device does not provide energy recovery in the process of braking the vehicle.

The most close to the proposed technical solution is a motorized wheel having a rim, an axle, an electric drive with a voltage regulator and a built-in electric motor consisting of two parts, one of which is a stationary stator mounted on the axle and having a magnetic circuit with uniformly allocated permanent magnets, while the other part includes a movable rotor carrying a rim and having a magnetic circuit with at least two groups of electric magnets, a commutator secured to the stator and having insulated current-conducting bars electrically interconnected in an alternating order (via every other bar) into two groups and to a voltage control unit, current collectors with two slip current collecting elements secured on the rotor, a pair of elements of each current collector is connected to the leads of the electric magnets of one respective group and has an electric contact with the commutator bars (PCT/SU 90/00209).

This motorized wheel has several modifications: models of different finish, systems with energy recovery during the motion, end-face mounted electric machine and so on.

The above described motorized wheel has some inherent advantages: the absence of a reduction gear, the electric motor is built in a wheel, use of low-voltage power sources, the absence of additional systems, energy recovery in the process of braking the vehicle and return of the counter-e m.f. energy during the motion, low weight and size.

However, this motorized wheel also has a number of disadvantages, the main of which consists in the mounting of electric magnets on the movable part. Such an arrangement reduces the reliability of the whole construction, because the electric magnets are more complex in manufacture than permanent magnets and are mounted on the external and movable wheel part. The installation of the heavy and complex electric magnets on the rotor worsens the dynamic and regulation characteristics of the motorized wheels used in transport vehicles. The connection of the electric magnets through contact elements does not allow one to switch over the windings, and this hinders the attainment of a constant-power operating mode. In view of some well known reasons, the contact connections do not permit high current to be used, that is, high output power cannot be obtained.

## Disclosure of the Invention

The basic object of the invention is to create such a motorized wheel, in which the mutual arrangement and electric connection of the components and their interaction would provide reliability and improve the control characteristics, when using low-voltage power supplies (up to 60 V), with a constant power output under variable loads and speed acceleration.

This object is attained by providing a motorized wheel comprising an axle, a rim capable of rotating about the axle, an electric drive with a controlled voltage unit and an electric motor built in the wheel and consisting of two parts, one of which is a stator rigidly secured on the axle and having a magnetic circuit with magnetic elements, while the other part is a rotor coupled to the rim and having a magnetic circuit with magnetic elements disposed along the rotor periphery and magnetically interacting with the magnetic elements of the stator to rotate the rim, a commutator formed by insulated current-carrying bars electrically interconnected in an alternating order to form two groups of bars; at least two currant collectors, each having at leas one slip element, interacting with the commutator bars, the width of any slip element being less than the distance between any two adjacent bars of the commutator; according to the invention, the commutator and the currant collectors are mounted on different parts of the electric motor; the magnetic elements of the stator magnetic circuit are well known electric magnets arranged in at least two groups; at least one group is electrically connected to the controlled voltage unit; at least one current collector corresponding to said group of magnetic elements; installed on different parts of the electric motor are at least one contact element and at least one additional current collector with at least one current collecting element interacting with the contact element; the groups of electric magnets of the stator are displaced relative to each other so that when the slip elements of the current collector corresponding to one group of electric magnets are located between the commutator bars, the electric magnets of this group are disconnected from the controlled voltage unit, while the electric magnets of the other group, having contact through the slip elements of the respective current collector and commutator bar, the slip elements of the additional current collector and the contact element, are electrically connected to controlled voltage unit and magnetically coupled with the magnetic elements of the rotor providing rotation of the rim, while their axles are disposed between the axles of the magnetic elements of the rotor.

In such a design of the motorized wheel, high reliability is provided due to the following facts: the most complicated elements are made stationary and released from a current overload, the power is kept constant under different loads, high dynamic and regulation characteristics of the motorized wheel, high power provided by the high current used in this machine.

The contact element in the motorized wheel can be made in the form of a ring-shaped current-carrying contact.

To improve the regulation characteristics, the motorized wheel may be provided with at least one additional commutator made of current-conducting bars electrically and alternately connected to form two groups interacting with the slip elements of at least one current collector. In so doing, the additional commutator is rigidly mounted on one of said parts of the electric motor and is insulated from this part.

To provide constant-power operating mode, a controlled winding switching unit is fixedly mounted in the motorized wheel; said switch has inputs whose number is equal to that of the groups of electric magnets of the stator and is connected to the circuit of the electric magnets of the groups and controlled voltage unit, the outputs of the controlled winding switching unit being electrically connected to the leads of the stator electric magnets.

To rise the controlled voltage and enhance the reliability, a controlled voltage switch is mounted in the motorized wheel fixedly relative to its axle. This switch is connected to the electric magnets of the groups and controlled voltage unit and has outputs and control inputs, the number of each of them is at least equal to that of the groups of electric magnets, and another input; the controlled voltage unit has first and second outputs; the first output is electrically connected through the slip elements to the respective current collector and additional current collector, bars of at least one commutator and a contact element to the control inputs of the controlled voltage switch to supply control voltage thereto, while the second output is connected to the input of the controlled voltage switch to supply control voltage thereto, each output of the controlled voltage switch being electrically connected to the outputs of the electric magnets of one respective group.

In order to increase the reliability, the controlled voltage unit is made in the form of a source of a heteropolar voltage with three outputs; one output of the electric magnets of the groups is electrically connected to the grounding output of the controlled voltage unit, while the output of the electric magnets of the groups is electrically and alternately connected with the first and second outputs of the controlled voltage unit via the slip elements of the respective current collector, commutator bars and the contact elements.

When the current collector corresponding to the groups of electric magnets, each having two slip elements, and when the slip elements of one of the current collector are disposed between the commutator bars, the slip elements of the other current collector are disposed on the bars of different groups of the commutator.

To improve the regulation properties of the motorized wheel, the stator electric magnets in any group and rotor magnetic elements are disposed around a circumference that the angular distance between the axes of any two electric magnets of the stator of one group and the axes of the magnetic elements of the rotor is multiple to the angular distance $\alpha$ ; any two electric magnets of one group and any two magnetic elements have opposite polarity with an angular distance between their axes equal to the odd number of angular distances $\alpha$ and have the same polarity at the even number of angular distance $\alpha$ ; when the slip elements of the current collector of the respective group of electric magnets are in one of the positions between the bars of the commutator, the axes of the electric magnets of this group coincide with the axes of the magnetic elements of the rotor, while the electric magnets of at least one of the group are electrically connected to the controlled voltage unit and their axes are displaced relative to the axes of the magnetic elements, in which case $\alpha$ = 360°/N, where N is an even natural number, or the electric magnets in any group are disposed uniformly with poles alternating around a circumference, while an even number of magnetic elements with alternating poles are disposed along the periphery of the rotor magnetic circuit; the commutator bars are distributed uniformly along a circumference and their number is equal to that of the magnetic elements, in which case $\alpha$ = 360°/M, where M is the number of magnetic elements of the rotor.

For electric energy recovery, the motorized wheel is provided with an electric energy accumulator, while at least one commutator has intermediate bars, each of which is placed between two adjacent bars of the commutator. The additional bars are electrically connected to each other alternately forming two groups of electrically connected intermediate bars of the commutator. When a slip element of the current collector corresponding to the group of electric magnets is in contact with the intermediate bar, the electric magnets of this group have additional electric connection with the electric energy accumulator through the slip elements of the respective current collector and additional current collector, the group of intermediate bars of the commutator and the contact element.

To provide electric energy recovery, various parts of the electric motor carry at least one energy recovery current collector with at least one slip element and at least one energy recovery ring contact interacting with the slip element, said slip element of the energy recovery current collector and the energy recovery ring contact are inserted in the additional electric circuit of the electric magnets and electric energy accumulator.

In the embodiment of the invention, which is very simple and reliable, the commutator is mounted on the rotor, while the current collectors, each having two slip elements, are mounted on the stator, in which case, the contact element is secured on the rotor and electrically connected to one group of bars of the commutator, while the slip element of the additional current collector mounted on the stator is electrically connected to the output of the controlled voltage unit whose ground terminal is electrically connected to the second group of commutator bars, the slip elements of each current collector being electrically connected to the leads of the electric magnets of the respective group.

Every input of the controlled winding switching unit inserted in the electric circuit of the slip elements and electric magnets of the group can be connected to the respective slip elements of the respective current collector, while the controlled voltage switch can be inserted in the electric circuit of the slip elements and controlled switching unit, in which case, each control input of the controlled voltage switch is electrically connected to the slip elements of the respective current collector, while each its output is connected to the respective input of the controlled winding switching unit.

To provide electric energy recovery, an energy recovery slip ring is mounted on the rotor and connected to one group of the intermediate bars of the commutator; the slip element of the energy recovery current collector mounted on the stator is connected to one output of the electric energy accumulator whose ground terminal is electrically connected to the intermediate bars of the other group.

To provide reliability, when the commutators and contact element are mounted on the stator, the number of commutators mounted on the stator is made equal to the number of groups of electric magnets, the current collector are equipped with two slip elements, the slip elements of the current collectors of the respective groups of electric magnets are in contact with the bars of the respective commutator. The additional current collector is mounted on the rotor while the contact element is mounted on the stator, the first slip element of all current collectors is connected to the slip element of the additional current collector, while their second elements have electric connection with the grounding input of the controlled voltage unit, whose other output is connected to the contact element, while the inputs of the controlled winding switching unit connected to the groups of bars of the respective commutator.

In accordance with one embodiment of the motorized wheel, the magnetic elements and electric magnets are mounted so that their axes are disposed radially to the wheel axis, and this decreases the motorized wheel size.

In accordance with another embodiment of the motorized wheel, the magnetic elements and electric magnets are mounted so that their axes are disposed in parallel to the wheel axis.

To increase the motorized wheel power, the stator has at least one additional magnetic circuit and at least one groups of electric magnets is arranged on each magnetic circuit of the stator.

In order to control the moment of applying the electric power to the motor, at least one commutator is made with a possibility of angular displacement relative to that part of the electric motor, on which it is mounted.

To simplify the adjustment, at least one current collector is made with a possibility of angular displacement relative to that part of the electric motor, on which it is mounted.

To increase the motorized wheel power, the rotor is provided with at least one additional magnetic circuit with magnetic elements.

To provide charging of an electric energy accumulator, the controlled voltage unit has an input to be connected to any external power source.

## Brief Description of the Drawings

The invention will be better understood from the following detailed description of one embodiment of the motorized wheel of a vehicle, according to the invention, with reference to the accompanying drawings, in which:

Figure 1 is a schematic diagram of the motorized wheel with a commutator on the rotor;

Figure 2 is cross-sectional view of the motorized wheel and one embodiment of the controlled voltage unit;

Figure 3 is an electric circuit in a symbolic picture of the motorized wheel;

Figure 4 is an embodiment of the winding switching unit;

Figure 5 is an embodiment of the control unit and its connection to the switches of the controlled winding switching unit built around integrated switches, and a specific embodiment of one of the integrated switches;

Figure 6 is an embodiment of the controlled voltage switch;

Figure 7 is an embodiment of an electric circuit with a controlled winding switching unit in a symbolic picture of the motorized wheel;

Figure 8 is an embodiment of the electric circuit of the motorized wheel with a controlled voltage switch in a symbolic picture of the motorized wheel and an embodiment of the controlled voltage unit;

Figure 9 is an embodiment of the motorized wheel with a commutator provided with intermediate bars;

Figure 10 shows the motorized wheel commutator with intermediate bars;

Figure 11 is an embodiment of the electric circuit of the motorized wheel with an electric energy accumulator in a symbolic picture of the motorized wheel, and an embodiment of electric energy accumulator;

Figure 12 is still another embodiment of the motorized wheel electric circuit with an electric energy accumulator and a controlled winding switching unit;

Figure 13 is an embodiment of the motorized wheel with commutators on the stator;

Figure 14 is a partial sectional view of the motorized wheel of Figure 13 with a controlled voltage unit;

Figure 15 is an embodiment of the electric circuit of the motorized wheel with a controlled voltage unit made as a source of heteropolar voltage;

Figure 16 is an embodiment of the motorized wheel with additional magnetic circuits of the rotor and stator and disposition of the axes of magnetic elements and electric magnets in parallel to the wheel axis.

## Preferred Embodiments of the Invention

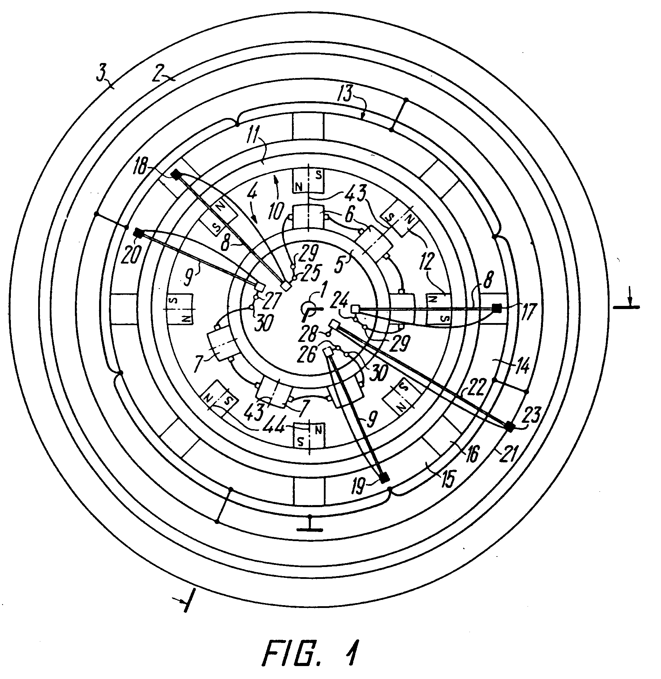

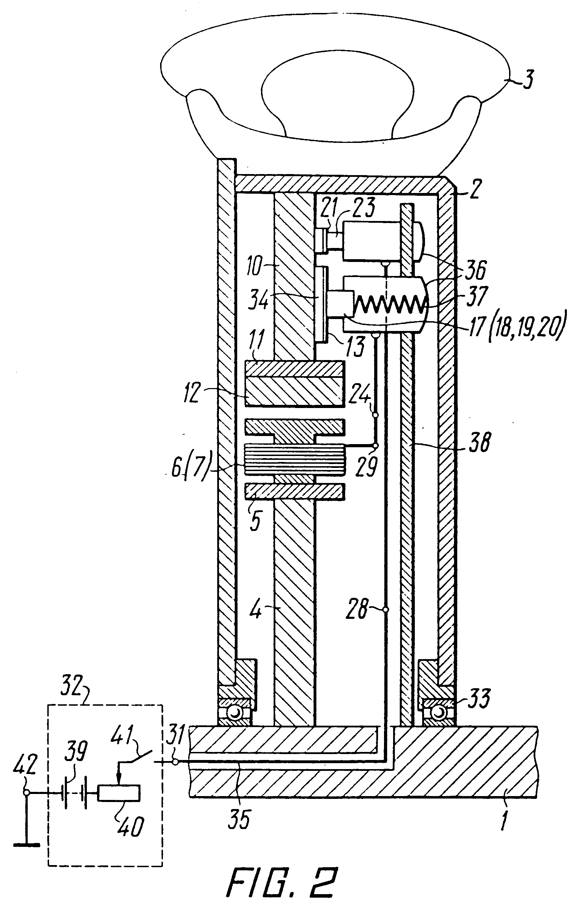

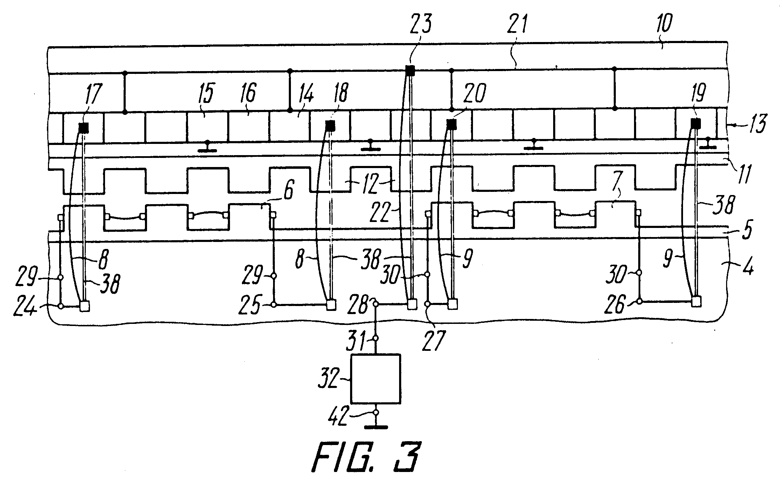

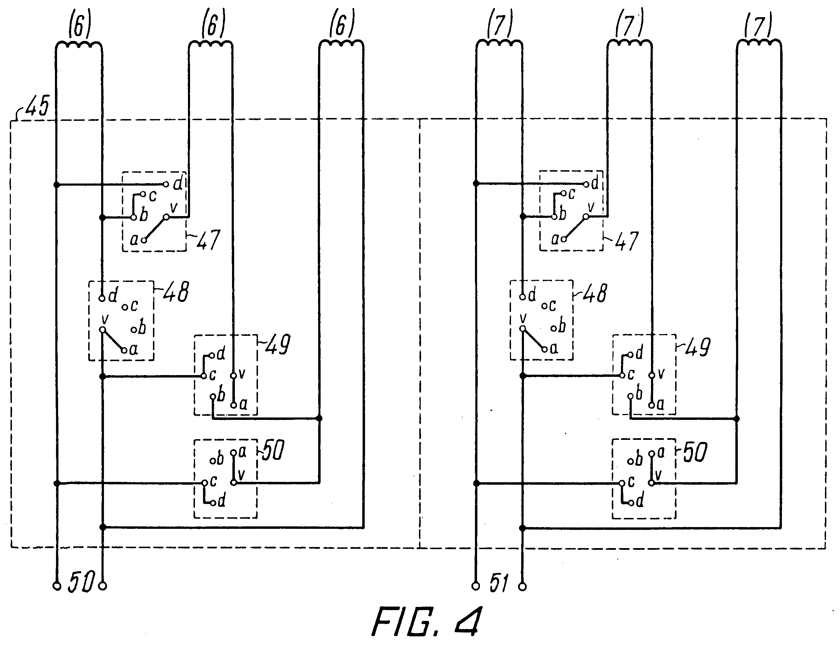

The motorized wheel (Figures 1, 2) comprises an axle 1, a rim 2 capable of rotating relative to the axle 1 and carrying a bus 3, an electric drive with a controlled voltage unit and an electric motor built in the wheel and consisting of two parts, one of which is a stator 4 rigidly secured on the axle 1 and having a magnetic circuit 5 including at least two groups of electric magnets 6, 7, each of which corresponds to at least one current collector 8, 9. The other part of the electric motor includes a rotor 10 coupled to the rim 2 and having a magnetic circuit 11 with magnetic elements 12 disposed along the periphery of the rotor 10 and magnetically interacting with the electric magnets 6, 7 of the stator 4 to rotate the rim 2. The number of groups of electric magnets 6, 7 mounted on the stator 4 can be arbitrary, e.g., three, five and so on, which is not shown in the drawing for the sake of simplicity and better understanding.

The motorized wheel has a commutator 13 mounted on the rotor 10 and formed by insulated current-carrying bars 14 and 15 electrically and alternately connected to each other forming two groups of bars. Installed between every two adjacent bars is one additional bar 16. Each of the current collectors 8 and 9 has at least one slip element; in this specific embodiment there are mounted two such elements, 17, 18 and 19, 20, respectively, interacting with the bars 14 and 15. The width of each slip element 17-20 is less than the distance between any two adjacent bars 14 and 15.

The motorized wheel has at least one contact element 21 made in the form of an annular current-carrying contact (slip ring) and at least one additional slip element 23 interacting with the contact element 21.

The slip elements 17, 18, 19, 20 and 23 have leads 24, 25, 26, 27 and 28 respectively. The electric magnets 6 and 7 of the groups have leads 29 and 30 respectively.

The contact element 21 is connected to one group of bars 14 of the commutator 13, while the lead 28 of the slip element 23 of the additional current collector 22 is electrically connected to the output 31 of the controlled voltage unit 32 (Figure 2) whose other output is electrically connected to the bars 15 of the other groups (grounded through the motor body).

The rim 2 can be mounted on the axle 1 through bearings 33.

The bars 14, 15, 16 of the commutator 13 are arranged on a current-conducting annular base 34, and each two adjacent bars are insulated one from another (but the bars 14 and 15 are electrically interconnected to form groups).

The commutator 13 and current collectors 8 and 9 are usually disposed on different parts of the electric motor (rotor 10 and stator 4). In so doing, their position is in many cases invariant.

The axle 1 of the motorized wheel is hollow to pass current leads 35 connecting the internal elements of the motorized wheel with the external ones (for example the slip element 23 and unit 32).

The current collector 8, 9, 22 are as a rule made as a set of slip elements 17-20, 23 (brushes), brush holders 36 with spring members 37 pressing the brushes to the bars 14, 15 of the commutator 13 for a better contact, leads 24-28 to supply electricity to the slip elements and, if necessary, a fastening 38, which may be absent when some slip elements are secured on the other slip elements or on the motorized wheel components (for example rim 2).

The controlled voltage unit 32 may consist of a storage battery 39 and a control unit realized in any known way to vary the voltage, e.g., on a variable resistor 40 or on a controlled source of pulse-width modulation controlling a switch operating in a marginal checking mode. The unit 32 may be provided with a switch 41 to deenergize the unit 32. In this case, the storage battery 39, resistor 40 and switch 41 are connected in series and to the output 31, while the other lead of the storage battery 39 is connected to the output 42 for grounding the unit 32.

From the point of view of a maximum magnetic flux, it is reasonable that the electric magnets 6, 7 in any group are disposed uniformly with pole pieces alternating along a circumference, while on the periphery of the magnetic circuit 11 of the rotor 10 an even number of magnetic elements 12 are installed uniformly with their poles alternating along a circumference. In so doing, the bars 14, 15 of the commutator 13 are arranged uniformly along a circumference and their number is equal to that of the magnetic elements 12, $\alpha = 360°/M$, where M is the number of magnetic elements 12 of the rotor 10.

When it is necessary to provide a larger number of turns of insertion of such elements as sensor between the magnetic elements 12 or electric magnets 6, 7 of the groups, the electric magnets 6, 7 of the stator 4 in any group and the magnetic elements 12 of the rotor 10 are so disposed along a circumference that the angular distance between the axes 43 of any two electric magnets 6, 7 of one group and the axes 44 of any two magnetic elements 12 is multiple to the angular distance $\alpha$. Any two electric magnets 6, 7 of one group and the magnetic elements 12 have opposite polarity, when the angular distance between their axes (43, 44) is equal to an odd number of angular distances $\alpha$, and have the same polarity in the case of an even number of angular distances $\alpha$. When the slip elements 17 and 18 (or 19, 20) of the current collector 8 (or 9) corresponding to the group of electric magnets 6 (or 7) in one of the positions between the commutator bars, the axes 43 of the electric magnets 6 (or 7) of this group coincide with the axes 44 of the magnetic elements 12, while $\alpha = 360°/N$, where N is the natural number.

In Figures 1, 2 the axes 43 of the electric magnets 6, 7 and the axes on the magnetic elements 12 are radial.

In the general case, the distance, e.g, between the axes 43 of the electric magnets 6, 7 can long (multiple to $\alpha + \Delta\alpha$, for example, for increasing the number of turns on the windings of the electric magnets 6, 7. This is possible due to the low steepness of the function of the magnetic flux intensity in the core of the deenergized electric magnet placed opposite to the magnetic element 12.

In the current collectors 8, 9 having two slip elements 17, 18 and 19, 20, the distance between the axes of two slip elements is preferably made multiple to the odd number of distances $\alpha$. In this general case, when the slip elements 17, 18 of the current collector 8 are disposed between the bars 14, 15 of the commutator 13, the slip elements 19, 20 of the current collector 9 are disposed on the bars 14, 15 of various groups of the commutator 13.

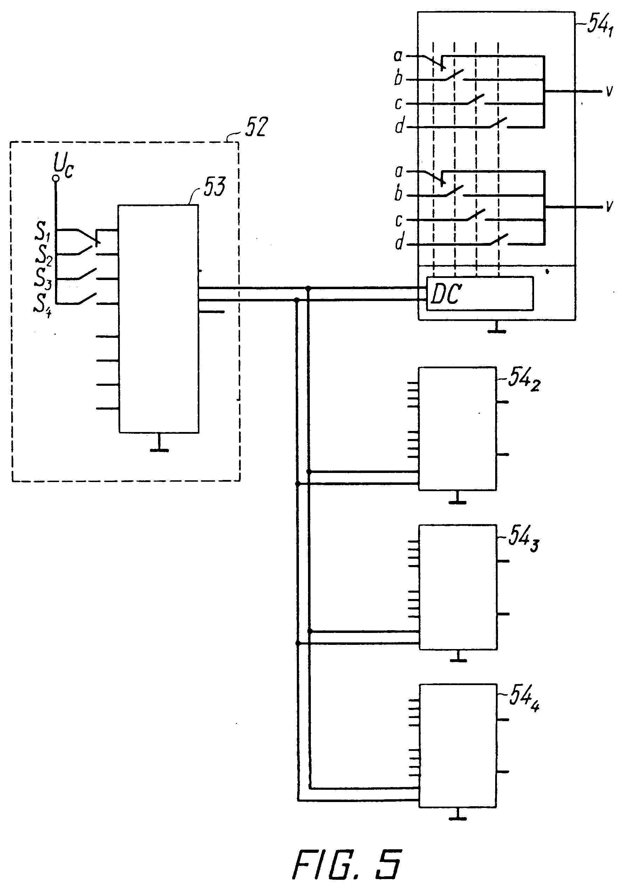

The electric circuit of the motorized wheel is shown in Figure 3.

The controlled voltage unit 32 is connected to the groups of bars 14 and 15; one output 31 of this unit is connected through the additional current collector 22, its element 23 and contact element 21, while the other output 42 is connected through the "body". In some cases it is possible to avoid connection through the "body" by using a second contact element and the slip element of the additional current collector thus providing a similar connection. It helps to avoid the action of external factors but adds still another contact pair. The electric magnets 6 and 7 are electrically connected to the bars 14 and 15 via the corresponding slip elements 17, 18 and 19, 20. In so doing, with disposition of one slip elements 17, 18 of one group of electric magnets 6 between the bars 14 and 15, the elements 19, 20 of the other group of electric magnets 7 are in contact with the bars of the commutator 13 forming pole pieces of the electric magnets 7.

In this general case, the groups of electric magnets 6, 7 of the stator 4 are displaced relative to each other so that with disposition of the slip element 18 or 19 of the current collector 8 or 9 corresponding to one group of electric magnets 6 or 7 of the stator 4 between the bars 14, 15 of the commutator 13, the electric magnets 6 or 7 of this groups are disconnected from the controlled voltage unit 32, whereas the electric magnets 7 or 6 of the other group through the contacting slip element 18 or 19 of the corresponding current collector 8 or 9 and bars 14, 15 of the commutator 13, the slip elements 23 of the additional current collector 22 and the contact element 21 are electrically connected to the controlled voltage unit 32 and are magnetically coupled to the magnetic elements 12 of the rotor 10 providing rotation of the rim 2, while their axes 43 are disposed between the axes 44 of the magnetic elements 12 of the rotor 10.

The motorized wheel can be completed with a controlled winding switching unit 45 and a controlled voltage switch 46 installed fixedly relative to the axle 1 of the wheel. In so doing, the winding switching unit 45 can be installed outside the motorized wheel ( in the vehicle body) for manual switching connecting it via the current leads 35, while the voltage switch 46 can be installed inside the motorized wheel on the stator 4. In the general case, each of them can be mounted both outside or inside the motorized wheel.

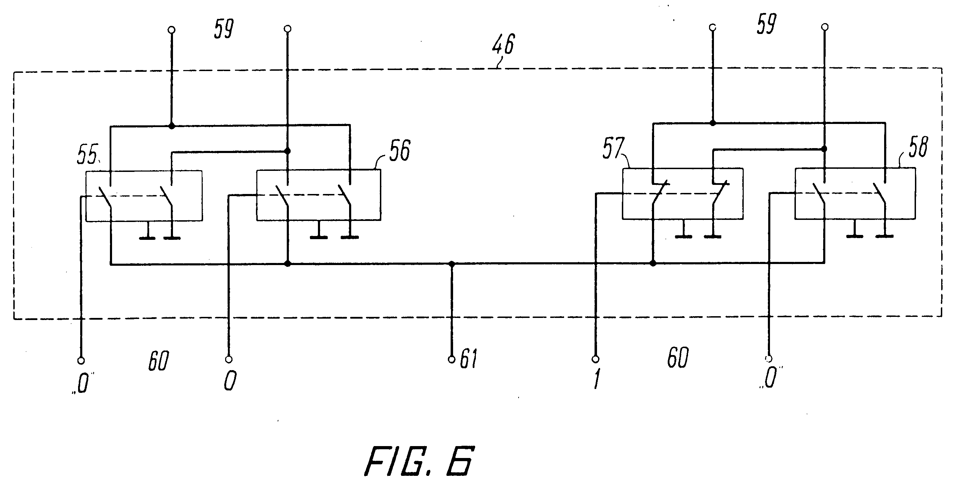

The embodiment of the controlled winding switching unit 45 is shown in Figure 4. It comprises, for example, four switches 47-50 per group of electric magnets. The position "a" is neutral,"b" is series connection, "c" is combined parallel-series connection, "d" is parallel connection of the electric magnets ("V" is the common lead of the switches 47-50). These well known connections of electric magnets in the groups provide constant power and enhanced reliability of the motorized wheel.

The switches 47-50 are changed over simultaneously and can have a common control (a handle similar to the transmission control lever of a car).

The controlled winding switching unit 45 is electrically connected to the electric magnets 6, 7 and controlled voltage unit 32 and has inputs 50 and 51 whose number is equal to that of the groups of electric magnets, while the switch outputs are connected to the outputs of the windings of the electric magnets. When it is mounted inside the motorized wheel, without using current conductors 35, a control unit 52 must be used. In so doing, the control unit 52 and the controlled winding switching unit 45 may be built around integrated circuits shown in Figure 5.

The control unit 52 is an encoder 53 (four input channels and two outputs channels, e.g. SN 54148), when the controlled winding switching unit 45 is based on two integrated dual switches 54 (four input channels per output channel, e.g., H1509A) for each group of electric magnets. On pressing one of the push buttons S1-S4, the switches 47-50 (Figure 4) occupy one of the positions "a" - "d", while the position "V" is the switch output. For example, suppression of the button S4 sets the switch output in the position "d", i.e., the electric magnets in each group are connected in parallel.

Figure 6 shows an embodiment of the controlled voltage switch 46.

It can be based on integrated switches 55-58 having two channels closed simultaneously when the a high potential is applied to the control inputs (for example HI201 with two OR gates uniting the control inputs in every two inputs). The number of pairs of integrated switches 55, 56 and 57, 58 is equal to the number of groups of electric magnets 6 and 7. In the pairs there are united the first and second outputs of each integrated switch and are connected to the corresponding output 59 of the controlled switch voltage 46. The controlled input of the integrated switches 55-58 are connected each to the corresponding to control input 60, the first inputs are interconnected and connected to the input 61 of the controlled switch 46, while the second inputs of the integrated switches are grounded (in the general case in the absence of grounding of the controlled voltage unit 32 they are connected to its corresponding output 42).

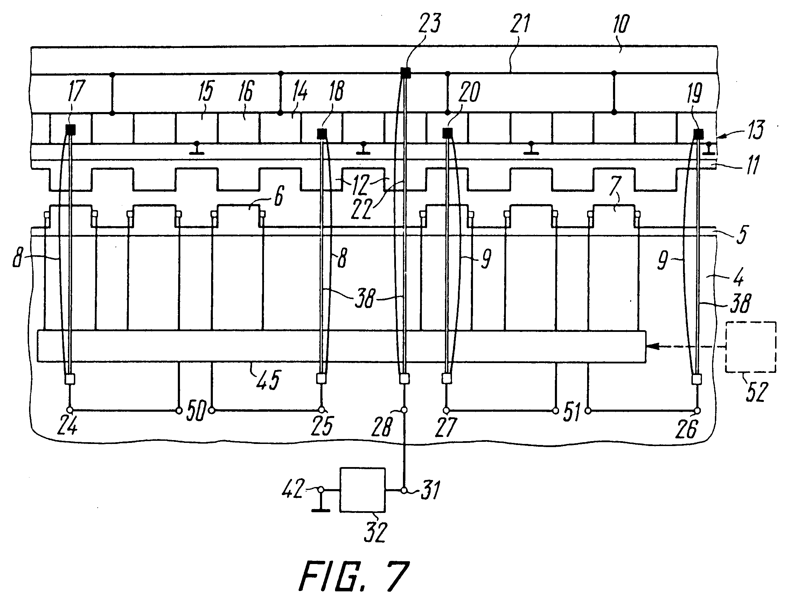

Shown in Figure 7 is the electric circuit of the motorized wheel with the integrated winding switching unit 45. In so doing, the inputs 50 and 51 of the switch 45 are connected to the outputs 24-27 of the respective of the slip elements 17-20, while the outputs are connected to the outputs 29 and 30 of the electric magnets 6,7. The switch 45 can be controlled by the control unit 52 whose output is connected to the control inputs of the switches 47-50 (Figures 4,5).

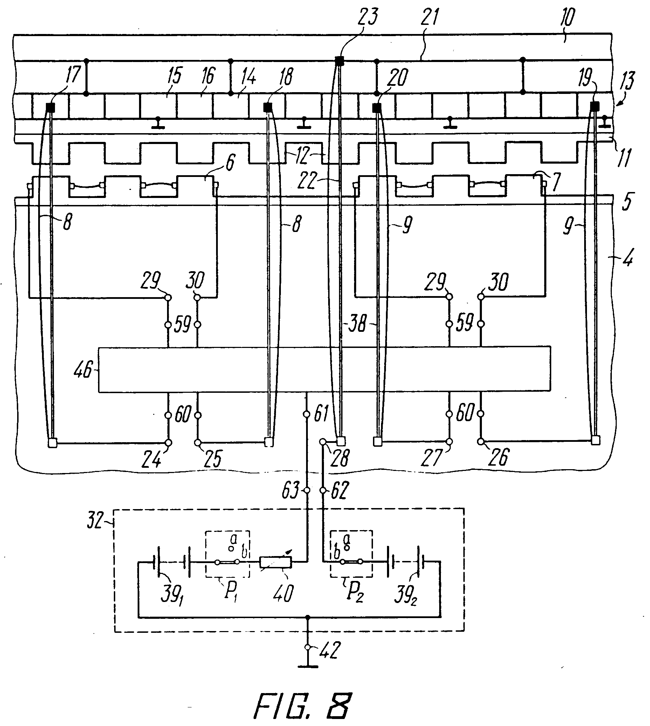

Figure 3 shows a version of connection of the controlled voltage switch 46 having a number of control inputs 60 and outputs 59 each equal to the number of groups of electric magnets 6, 7. The controlled voltage unit 32 has two outputs 62 and 63, the first of which is used to supply a voltage through the slip elements 17-20 and 23, the contact element 21 and the bars 14, 15 of the commutator 13 to the control inputs 60 of the controlled voltage switch 46, while the second output 63 is used to supply controlled voltage to the input 61 of the voltage switch 46 whose outputs 59 are connected to the electric magnets 6 and 7 of the groups (directly or via the controlled winding switching unit 45). The unit 32 can be based on two storage batteries $39_1$ and $39_2$, one of which is connected to the second output 63 through a control unit in the form of a variable resistor 40, and the other is connected to the first output 62 (in some cases, the storage batteries $39_1$ and $39_2$ are preferably connected through functional elements, e.g. a Zener diode or comparators to check the control voltage and decoupling of electric circuits; in Figure 8 they are connected through switches P1 and P2). The outputs 59 of the controlled voltage switch 46 are connected to the outputs 29, 30 of the groups of electric magnets 6,7, the control inputs 60 are connected to the slip elements 17-20, and the input 61 is connected to the output 63 of the unit 32.

When the slip element 20 is in contact with the bar 14 of the commutator 13, the high potential renders the corresponding switch 57 conducting, and an electric current flows through the windings of the electric magnet 7 in a predetermined direction from the second output 63 of the unit 32. When the other slip element 19 is in contact with the bar 14 of the commutator 13, another switch 58 is rendered conductive, and the current flows in the opposite direction forming opposite pole pieces of the electric magnets 7. When the slip elements 18, 19 of one group of electric magnets 7 are in contact with the additional bars 16 of the commutator 13, the other switches 55, 56 are rendered conductive in turn through the slip elements 17, 18 of the controlled voltage switch 46 providing power supply to the respective electric magnets 6 of the other group.

In the general case, the electric circuit connecting the controlled voltage unit 32 and the electric magnets may include controlled switches 45 or 46 of windings or voltage or both, said switched being controlled in a well known manner. In the case of voltage control, these switches are connected in series: the outputs of the controlled winding switch 45 are connected to the outputs of the electric magnets while its inputs 50 and 51 are connected to the outputs 59 of the controlled voltage switch 46. Its input 61 is connected to the output 63 of the controlled voltage unit 32 while the control inputs 60 are connected to the corresponding contact elements (e.g., to the slip elements 17-20, groups of bars of the commutator (or commutators) depending on the motorized wheel design (Figure 8 shows an embodiment with connection of the control inputs 60 to the slip elements 17-20).

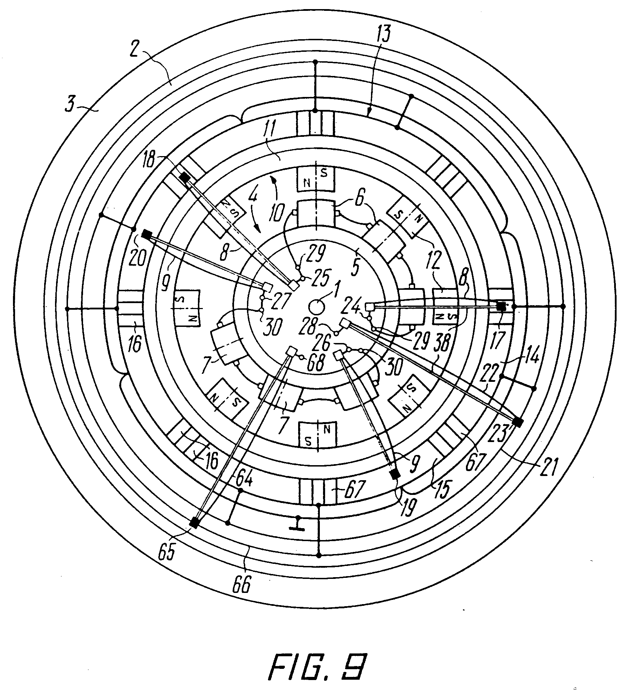

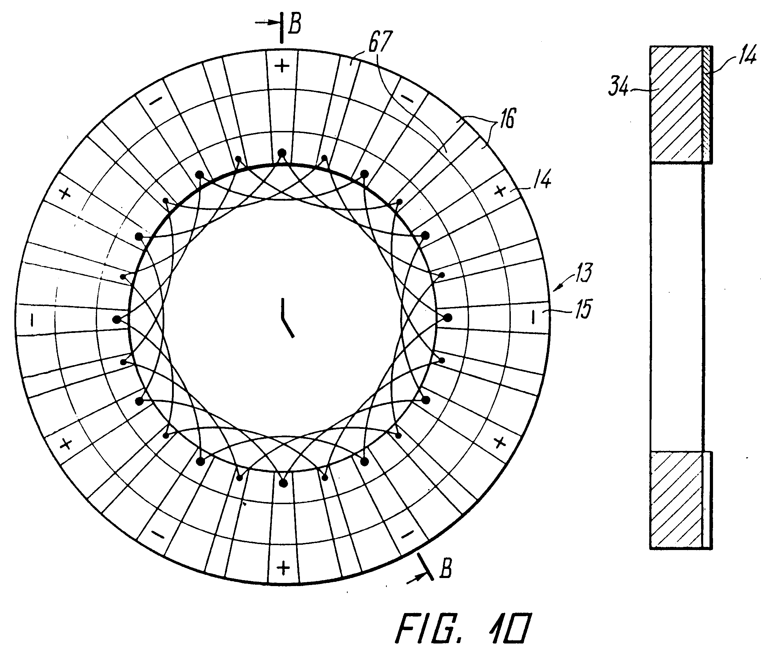

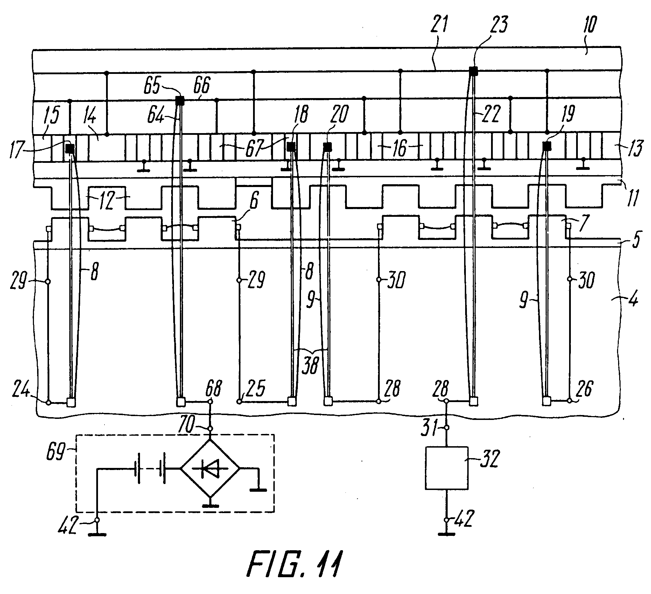

Figure 9 shows an embodiment with recovery of electric energy during the motion. For this purpose, use is made of a energy recovery current collector 64 with a slip element 65 and a slip-ring contact 66. In so doing, the commutator 13 is provided with groups of intermediate bars 67 (Figure 10) electrically and alternately interconnected in two groups (their connection is not shown in Figure 9). The slip element 65 has a lead 68. The slip-ring contact 66 is electrically connected to one group of intermediate bars 67 whose other group is connected through the motor bode to the ground terminal 42 of the electric energy accumulator whose other output 70 is connected to the slip element 67. The electric circuit diagram of the motorized wheel of Figure 9 is shown in Figure 11.

When the slip element 17-20 corresponding to the group of the electric magnets 6, 7 is in contact with the intermediate bar 67, the electric magnets 6, 7 of this group have additional electric connection with the electric energy accumulator 69 via the slip elements 17-20 of the respective current collector 8, 9 and additional current collector 22, the group of intermediate bars 67 of the commutator 13 and the contact element 21.

In the general case, installed on various parts of the electric motor are at least one energy recovery current collector 64 with at least one slip element 65 and at least one slip-ring contact 66 interacting with the slip element 65 of the energy recovery current collector 64, in which case, the slip element 65 of the energy recovery current collector 64 and the slip-ring contact 66 are inserted into the additional electric circuit of the electric magnets 6, 7 and electric energy accumulator 69.

The electric energy accumulator 69 can be made in the form of a rectifier and a storage battery.

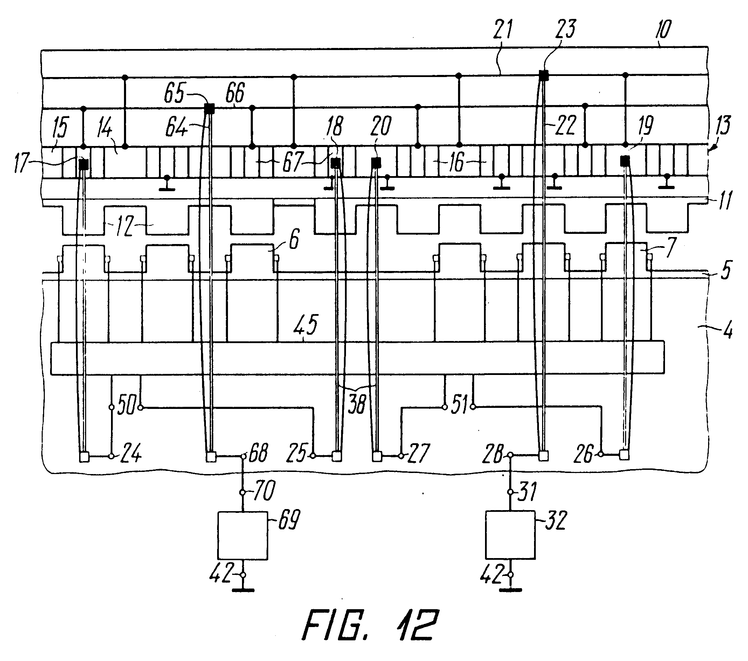

The controlled winding switching unit 45 in the case of electric energy recovery is connected in a similar way (Figure 12).

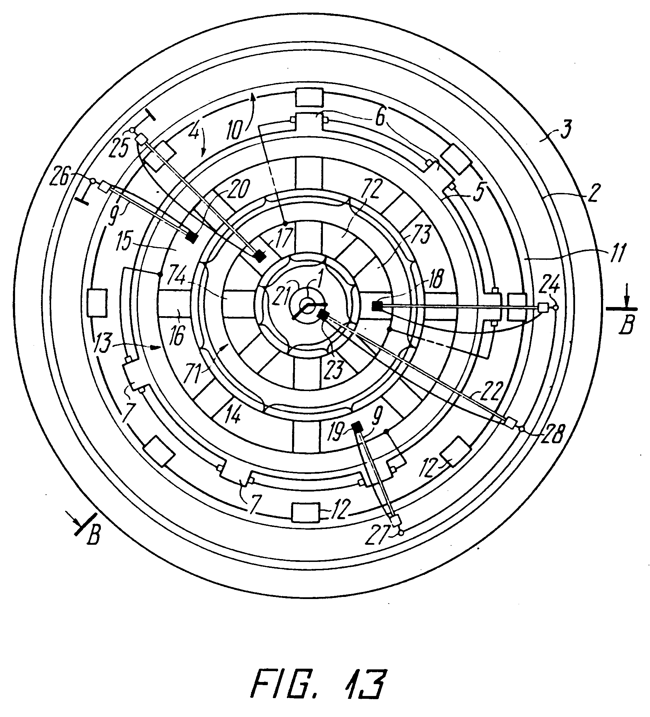

Another embodiment is possible, in which the commutators, whose number is equal to that of the group of electric magnets, is mounted on the stator (Figure 13).

Figure 13 shows a version of mounting of the additional current collector 22 on the rotor 10 and the contact element 21 on the stator 4. Their dispositions are invariant.

Figure shows the stator 4 carrying an additional commutator 71 with groups of bars 72 and 73, between which additional bars 74 are mounted. In this case, the electric magnets 6, 7 of the groups contact with the groups of bars 14, 15 and 72, 73 of the corresponding commutator 13 and 71 either directly or via the controlled winding switching unit 45. The slip element 23 of the additional current collector 22 is connected to the slip elements 18 and 19, while the contact element 21 is connected to the output 31 of the controlled voltage unit 32. The other output 42 of the unit 32 is electrically connected to the other slip elements 17 and 20 through the body (not shown in the drawing).

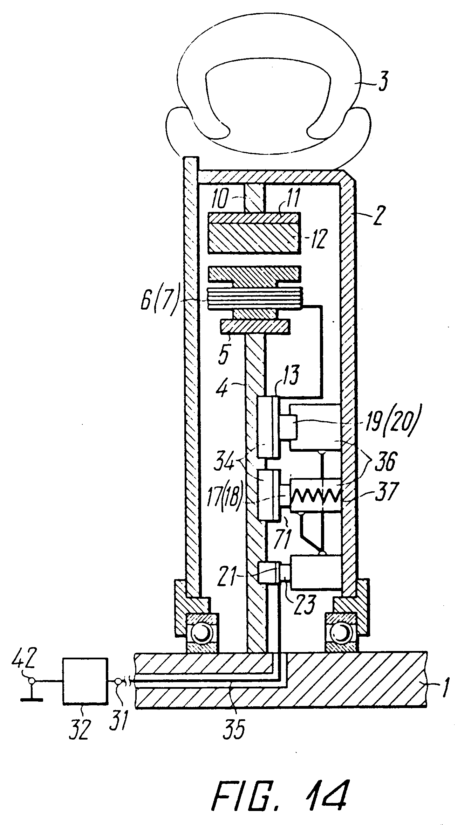

Figure 14 illustrates a cross-sectional view of the motorized wheel 10 shown in Figure 13. In this embodiment the fastening 38 of the current collector are not used because the brush holders are secured on the rim 2. In so doing, this construction, like any other, e.g. shown in Figures 9, 11, may include well known devices: controlled winding switching unit 45 whose outputs are connected to the groups of bars of the corresponding commutator 13 or 71 (instead of slip elements), a controlled voltage switch 46 whose control inputs are connected to the groups of bars of the corresponding commutator 13 or 71 (instead of slip elements), switches 45 and 46 connected in series, the control inputs of the controlled voltage switch 46 being connected to the bars of the corresponding commutator 13 or 71.

When the commutators 13 and 71 and the contact element 21 are mounted on the stator 4, the number of the commutator 13, 71 disposed on the stator 4 is made equal to the number of the groups of electric magnets 6, 7, the current collectors 8, 9 having two slip elements 17-20. The slip elements 17-20 of the current collectors 8, 9 corresponding to the groups of electric magnets 6, 7 are in contact with the bars 14, 15 and 72, 73 of the respective commutator 13, 71. The additional current collector 22 is mounted on the rotor 10, while the contact element 21 is mounted on the stator 4; the first slip element 18, 19 of all current collectors is electrically connected to the slip element 23 of the additional current collector 22; their second elements 17, 20 have electric connection with the grounding output 42 (or output 62 when the voltage switch 46 is switched on) of the controlled voltage unit 32 whose other output 31 (or output 63) is connected to the contact element 21.

The inputs 50, 51 of the controlled winding switching unit 45 can be connected to the groups of bars 14, 15 and 72, 73 of the respective commutator 13 and 71, or the inputs 50, 51 of the controlled winding switching unit 45 are connected to the outputs 59 of the voltage switch 46 whose control inputs 78 are electrically connected to the groups of bars 14, 15 and 72, 73 of the corresponding commutator (not shown).

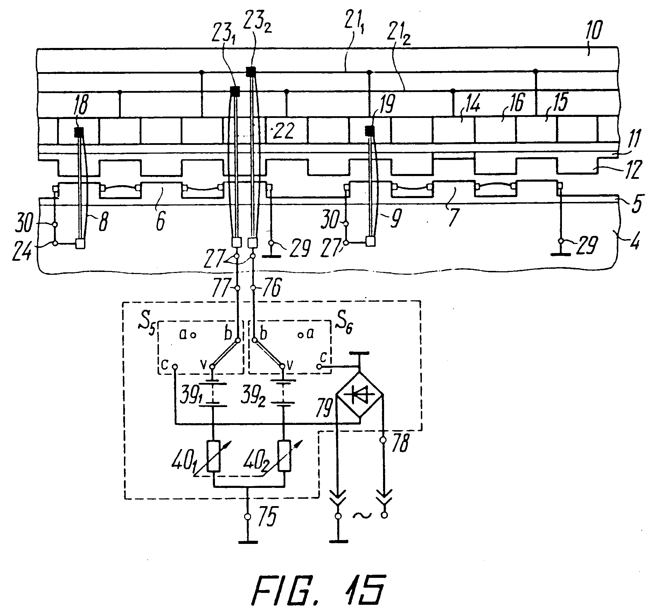

Figure 15 shows a construction, in which the controlled voltage unit 32 is made in the form of a source of heteropolar voltage and three leads 75-77, the lead 75 being a grounding bus. In so doing, the additional current collector 22 has two slip elements $23_1$ and $23_2$ in contact with the respective contact elements $21_1$ and $22_2$ connected to the respective bars 14 and 15 of the commutator 13. One lead 29 of the electric magnets 6, 7 is connected to the ground terminal 75. The outputs 76, 77 of the controlled voltage unit 32 are connected to the respective slip elements $23_1$ and $23_2$. The power supply lead 78 intended for connection to external power supply sources and for storage battery charging is connected through a rectifier 79 and switches S5 and S6 to the leads of the corresponding voltage sources $39_1$ and $39_2$ connected to the leads 76 and 77 of the unit 32 via the switches S5 and S6, respectively. The other leads of the voltage sources $39_1$ and $39_2$ are connected through control units (in Figure 15 variables resistors $40_1$ and $40_2$) to the ground terminal 75 of the unit 32.

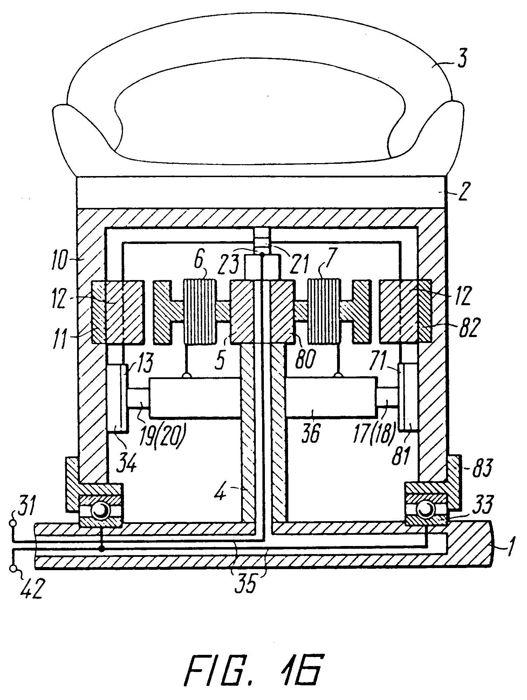

Figure 16 shows an embodiment of the motorized wheel comprising slip elements 17-20 secured on the stator 4, a first magnetic circuit 5 and a second magnetic circuit of the stator 4, each carrying a group of electric magnets 6, 7 and a current collector 23. Mounted on the rotor 10 is a main commutator 13 and an additional commutator 71 made on insulated annular bases 34 and 81; a first magnetic circuit 11 and a second magnetic circuit 82 of the rotor 10; a ring contact element 21 electrically connected to the group of bars 14, 72 of each commutator 13, 71, and a rim 2 with a tyre 3. The outputs 31 and 42 of the controlled voltage unit 32 are electrically connected so that one of them is connected to the current collector 23 and the other is connected to the group of bars 15, 73 of the commutators 13 and 71 (through the body). The axes 43 of the electric magnets 6, 7 and the axes 44 of the magnetic elements 12 are disposed in parallel to the axle 1 of the wheel.

The following remarks should be made:
1. Permanent magnets should preferably be used as the magnetic elements 12 of the rotor 10. If the magnetic elements 12 are electric magnets, it is necessary to use additional current collectors and contact elements to energize the electric magnets of the rotor 10 from the storage battery 39 of the controlled voltage unit 32 or from another built-in voltage source.
2. The commutator and current collectors, the contact element and the additional current collector, the slip-ring contact and the energy recovery current collector can be secured partially on the stator and partially on the rotor. Shown in Figures 1 and 13 are various methods of fixing the contact element 21 and additional current collector 22.

3. To reduce the amount of contact elements, use is made of at least one current collecting slip element of the current collectors. In this case, when one slip elements 17-20 of the current collectors, corresponding to groups of electric magnets, is used, the controlled voltage unit 32 must be made as a sources of heteropolar voltage. When an ordinary storage battery is used (which increases the voltage amplitude) said current collectors have two slip elements. In this case, however, it is possible to connect one group of bars of the commutator through the body (Figures 1, 2) so only one element 23 of the additional current collector 22 is used. Similar reasoning concern intermediate bars (Figures 9, 11). In order to exclude any interference from external sources, it is expedient to avoid connection via the body but use two contact elements 21 and two elements 23 of the additional current collector 22. In a similar way, the intermediate bars can be connected through two slip-ring contacts (with two slip elements 65 of the energy recovery current collector 64).

4. Mounting of the current collector implies stationary installation of its element relative to the corresponding part of the motorized wheel. The slip elements can be secured in brush holders 36 on special fixing elements (Figure 2) on the rim 2 (Figure 14) and to other fixed slip elements.

5. The electric energy accumulator 69 may be based on a storage battery and rectifier (Figure 11) or on a storage battery, when it is used in an additional electric circuit with the electric magnets 6, 7 of the rectifier (as an individual component).

6. The controlled voltage unit 32 is preferably based on a connection of the storage battery 39 with an output 31 through a transistor operating in a marginal mode (to avoid losses) and controlled by a pulse-width source (whose duty factor depends on a required rotational speed).

The operation of all embodiments of the motorized wheel is similar to that of the prior art and is based on the forces of electromagnetic attraction and repulsion appearing during the interaction of electric magnets 6, 7 of stator 4 and magnetic elements 12 of the rotor 10. When the electric magnets 7 are in a position with their axis 43 is between the axes 44 of the magnetic elements 12, an electric current flows through the windings of the electric magnets 7 so that formed on its surface in the process of rotation is a magnetic pole opposite to the pole of the next pole of the magnetic elements 12 and identical to pole of the preceding magnetic elements 12. Thus, the electric magnets 7 are simultaneously repulsed from the preceding magnetic elements 12 and are attracted to the next ones. When the electric magnets 6 are opposite to the magnetic elements 12, they are deenergized due to the fact that the slip elements of the corresponding current collector are located between the bars 14 and 15 of the commutator 13. However, the rotation is not stopped due to the fact that an electric current flows through the windings of the electric magnets 17 of the other group. In so doing, when the slip elements 17-20 contact a regular additional bar 16, the direction of the current in the electric magnets inverses, and an opposite pole is formed on the surface of the electric magnets facing the magnetic elements because of the contact of the slip elements 17-20 with the bars of the other groups 14 or 15.

In the general case, with m groups of electric magnets, the electric magnets of one to m-1 groups can be deenergized simultaneously.

When the slip elements are in contact with the intermediate bars 67 (74), an electromotive force appears in the windings of the electric magnets 6, 7 due a change of the magnetic flux in the core of the electric magnets 6, 7 at the expense of the rotating magnetic elements 12 of the rotor 10. This voltage is used for charging the electric energy accumulator 69.

The motorized wheel operates as follows.

When a voltage from the controlled voltage unit 32 is applied to the commutator 13 (by closing the switch 41) via the slip elements 23 of the additional current collector 22 and contact element 21, the group of electric magnets 7 comes in electromagnetic interaction with the magnetic elements 12 of the rotor 10 due to the contact of the slip elements 19, 20 with the bars 14 and 15. The electric magnets 7 are repulsed from the preceding and attracted to the following magnetic elements 12 (in the direction of rotation) producing a torque.

At this time, the other electric magnets 6 produce no torque due to the absence of electric current in their windings since the associated slip elements 17, 18 are between the bars 14 and 15.

Therefore, at least one group of electric magnets 6 or produces a torque.

In the process of rotation the slip elements 19, 20 happen to be between the bars 14, 15 of the commutator 13 disconnecting the electric magnets 7 while the other slip elements 17, 18 are in contact with bars 14, 15 providing the interaction of the electric magnets 6 of the other group.

Then the process is repeated and the rotation is provided by at least one group of electric magnets 6 or 7. By varying the controlled voltage parameter of the unit 32 (e.g., amplitude), the current through the electric magnets is controlled. In another type of control (for example pulse-width control) the amount of electricity fed to the windings of the electric magnets 6, 7 is varied thus controlling the force of electromagnetic interaction and, therefore, changing the rotational speed.

A connection of the controlled winding switching unit 45 (Figure 7) to the electric circuit allows one to change the inductance and the type of connection of electric magnets to provide constant power. In this case, with low speeds (and high loads) the electric magnets are connected in series (position "b" of the switches 47-50, Figure 4), while at a high speed, after acceleration, the electric magnets are connected in parallel (position "d" of the switches), while in the process of acceleration or depending on the load the switch 45 provides intermediate switching of the windings (position "c" of the switches) which can be series-parallel, parallel -series or another (for example, disconnection of some electric magnets).

The winding switching unit 45 can be controlled by hand (similarly to the transmission control lever of a car), when it is mounted outside the motorized wheel, or via an electronic control unit 52 so that the switch 45 can be mounted inside the motorized wheel, to avoid a lot of current supply wires 35 from the electric magnets and to enhance the convenience of control of the switch 45.

The controlled voltage switch 46 can be based on the controlled voltage unit 32 with two outputs 62 and 63, the first of which is used for applying a control voltage to the control inputs 60 of the switch 46 and the second one is used to supply a higher controlled voltage to the input 61 of the controlled voltage switch 46, the voltage from the leads 59 being applied to the windings of the electric magnets 6 and 7.

In this case, before starting the motion of the vehicle, the switches $P_1$ (Figure 8) and $P_2$ are closed thus switching on the storage batteries $39_1$ and $39_2$. In so doing, the control inputs 60 of the switch 46 is fed with a control voltage from the output 62 of the unit 32 depending on the disposition of the electric magnets. When the electric magnets 7 are disposed between the magnetic elements 12, the control voltage is applied to the control inputs 60 through the elements 19 and 20. Depending on the voltage level, one of the integrated switches 57 or 58 (Figure 6) is switched on providing connection of the second output 63 of the unit 32 to the windings of the electric magnets 7. No voltage is applied to the electric magnets 6. The control inputs 60 are dual (each having a par of leads) to connect two slip elements whose disposition on the bars 14 and 15 defines the voltage $(U_n; O)$.

During the motion of the motorized wheel at the expense of the counter-electromotive force appearing the windings of the electric magnets energy recovery can be effected (Figures 9-11). When the electric magnets 6 of one group are disposed opposite to the magnetic elements 12, i.e. when the slip elements 17, 18 of the corresponding current collector 8 are between the bars 14, 15 and on the intermediate bars 67 of the commutator 13, they are connected to the electric energy accumulator 69 to charge it by pulse current via the slip elements 17, 18 of the corresponding current collector 8, the slip elements 65 of the energy recovery current collector 64, the intermediate bars 67 and the slip-ring contact 66.

The best embodiment of the motorized wheel is a design shown in Figure 12 combining electric energy recovery and a controlled winding switching unit 45 to enable one to vary the inductance of the groups of electric magnets and to recover the energy in the process of motion, operating similarly to the above-described systems.

Figures 13, 14 show an embodiment, in which the commutators are arranged on the stator. In this case, the commutator bars are connected to the leads of the electric magnets of the groups (instead of the slip elements).

When a voltage from the controlled voltage unit 32 is applied to the contact element 21, it is also applied to the commutator 13 through the slip elements 23 of the additional current collector 22 and the slip elements 18, 19. When some slip elements 17, 18 are between the bars 72 and 73, the other elements 19, 20 are on the bars 14 and 15 of the commutator 13 feeding the cor electric magnets 7 through the commutator. In the process of rotation the voltage is periodically applied to the bars 14, 15 and 72, 73 of the commutators 13 and 71 providing alternate interaction of the electric magnets 6, 7 of different groups with the magnetic elements 12 of the rotor 10.

In this embodiment a similar application of the controlled switches 45 and/or 46 is possible.

When the controlled voltage unit 32 is source of a heteropolar voltage, use is made of an additional current collector 22 with two slip elements $23_1$ and $23_2$, while the ground terminal 78 of the unit 32 is connected through the body to one lead 29 of the electric magnets 6, 7 of the groups (Figure 15). When the heteropolar voltage is applied to the bars 14, 15 of the commutator 13, the current in the windings of the electric magnets flows in one or another direction depending on the groups of bars (connected to different outputs 76, 77 of the unit 32) which the slip elements 17 or 20 is in contact.

The operation of the device shown in the Figures 15 and 16 is identical to that of the device shown in Figures 1, 2, 3.

Industrial Applicability

The motorized wheel can be used in various vehicles such as wheeled chairs, electric bikes, electric mini-tractors, electric carriages and electric cars, prolonging their service life, as compared to the prior art. The application of the controlled winding switching unit enhances the power with the same speed or speed at the same power at low speeds and increases the mileage by 7-13%.

Two motorized wheels are preferably used in wheeled chairs. The operating voltage: 24 volts (two storage batteries, each of 12 volts). The average operating current is equal to 6 A. Power output: 60 W for each wheel. Speed: 15 km per hour. Load capacity:100 kg. The distance of self-contained run is up to 160 km depending on the storage batteries used.

In electric bikes it is advisable to use a single motorized wheel. In so doing, the operating voltage is 48 V (four storage batteries of 12 V each). The average operating current is 5 A. The power is 220 W. The speed is 55 km per hour. The load carrying capacity is 100 kg. The distance of self-contained run is up to 160 km depending on the type of storage batteries used.

Electric mini-tractors are preferably equipped with four motorized wheels. In so doing, the operating voltage is 24 V (two storage batteries of 12 V each). The average operating current is 30 A. The power is 700 W. The speed is 35 km per hour. The load carrying capacity is up to 760 kg. The distance of self-contained run is up to 90 km depending on the type of storage batteries used.

A battery-operated truck (factory shop transport) is preferably equipped with two motorized wheels. In so doing, the operating voltage is 24 V (two storage batteries of 12 V each). The average operating current is 24 A. The power is 300 W per wheel. The speed is 30 km per hour. The load carrying capacity is 400 kg. The distance of self-contained run is up to 60 km depending on the type of storage batteries used.

A battery-operated truck (factory shop transport) is preferably equipped with two motorized wheels. In so doing, the operating voltage is 24 V (two storage batteries of 12 V each). The average operating current is 24 A. The power is 300 W per wheel. The speed is 30 km per hour. The load carrying capacity is 400 kg. The distance of self-contained run is up to 60 km depending on the type of storage batteries used.

A city electric car is preferably provided with two motorized wheels. In so doing, the operating voltage is 48 V (four storage batteries of 12 V each). The average operating current is 22 A. The power is 500 W per wheel. The speed is 90 km per hour. The load carrying capacity is 280 kg. The distance of self-contained run is up to 450 km depending on the type of storage batteries used.

**Claims**

1. A motorized wheel for a vehicle comprising an axle (1), a rim (2) capable of rotating about the axle (1), an electric drive with a controlled voltage unit (32) and an electric motor built in the wheel and comprising two parts, one of which is a stator (4) rigidly secured on the axle (1) and having a magnetic circuit (5) with magnetic elements, while the other part is a rotor (10) coupled to the rim (2) and having a magnetic circuit (11) with magnetic elements (12) disposed around the circumference of the rotor (10) and magnetically interacting with the magnetic elements of the stator (4) to rotate the rim (2), a commutator (13) formed by insulated current-carrying bars (14, 15) electrically interconnected in an alternating order to form two groups of bars; at least two current collectors (8, 9), each having at least one slip element (18, 19, respectively) interacting with the bars (14, 15) of the commutator (13), the width of any slip element (18, 19) being less than the distance between any two adjacent bars (14, 15) of the commutator (13); **characterized** in that, the commutator (13) and the current collectors (8, 9) are mounted on different parts of the electric motor; the magnetic elements of magnetic circuit of the stator (4) are well known electric magnets (6, 7) arranged in at least two groups; at least one group is electrically connected to the controlled voltage unit (32), each of the groups correspondings to at least one current collector (8,9); installed on different parts of the electric motor are at least one contact element (21) and at least one additional current collector (22) with at least one current collecting element (23) interacting with the contact element (21); the groups of electric magnets of the stator (4) are displaced relative to each other so that when the slip elements (18 or 19) of the current collector (8 or 9) corresponding to one group of electric magnets (6 or 7) of the stator (4) are located between the bars (14, 15) of the commutator (13), the electric magnets (6 or 7) of this group are disconnected from the controlled voltage unit (32), while the electric magnets (7 or 6) of the other group having contact through the slip element (18 or 18) of the respective current collector (9 or 8) and the bar (14 or 15) of the commutator (13), the slip element (23) of the additional current collector (22) and the contact element (21) are electrically connected to the controlled voltage unit (32) and magnetically interconnected with the magnetic elements (12) of the rotor (10) providing rotation of the rim (2), while their axes (43) are located between the axes (44) of the magnetic elements (12) of the rotor (10).

2. The motorized wheel, according to Claim 1, **characterized** in that the contact element (21) is made in the form of a ring-shaped current-carrying contact.

3. The motorized wheel, according to Claim 1, **characterized** in that the motorized wheel has at least one additional commutator (71) made of current conducting bars (72, 73) electrically and alternately interconnected to form two groups interacting with the slip elements (18) of at least one current collector (8), in which case, the additional commutator (71) is mounted on one of said parts of the electric motor and is rigidly insulated therefrom.

4. The motorized wheel, according to Claim 1, **characterized** in that the installed fixedly relative to the axle (1) is a controlled winding switching unit (45) having inputs (50, 51), whose number is equal to that of the groups of electric magnets (6, 7) of the stator (4), and is connected to the circuit of the electric magnets (6, 7) of the groups and a controlled voltage unit (32), the outputs of the controlled winding switching unit (45) being electrically connected to the leads of the electric magnets (6, 7) of the stator (4).

5. The motorized wheel, according to Claim 1, **characterized** in that a controlled voltage switch (46) is mounted fixedly relative to the axle (1); said switch is connected to the electric magnets (6, 7) of the groups and controlled voltage unit (32) and has outputs (59) and control inputs (60), the number of each of them is at least equal to that of the groups of electric magnets (6, 7), and another input (61); the controlled voltage unit (32) has a first output (62) and a second output (63); the first output (62) is electrically connected through the slip elements (17-20 and 23) to the respective current collector (9, 8) and the additional current collector (22), bars (14, 15) of at least one commutator (13) and a contactel element (21) to the control inputs (60) of the controlled voltage switch (46) to supply control voltage thereto, while the second output (63) is connected to the input (61) of the controlled voltage switch (46) to supply control voltage there-

to, each output (59) of the controlled voltage switch (46) being electrically connected to the outputs of the electric magnets (6, 7) of one respective group.

6. The motorized wheel, according to Claim 1, **characterized** in that the controlled voltage unit (32) is made in the form of a source of a heteropolar voltage with three outputs (75, 76, 77); one output (29) of the electric magnets (6, 7) of the groups is electrically connected to the grounding output (75) of the controlled voltage unit (32), while the other output (30) of the electric magnets (6, 7) of the groups is electrically and alternately connected with the first (76) and second (77) outputs of the controlled voltage unit (32) via the slip elements (18, 19 and $23_1$, $23_2$) of the respective current collector (8, 9) and the additional current collector (22), bars (14, 15) of the commutator (13) and two contact elements ($21_1$ and $21_2$).

7. The motorized wheel, according to Claim 1, **characterized** in that when the current collector (8, 9) of the respective groups of electric magnets (6, 7), each having two slip elements (17, 18 and 19, 20), and when the slip elements (17, 18) of one current collector (8) are located between the bars (14, 15) of the commutator (13), the slip elements (19, 20) of the other current collector (9) are disposed on the bars (14, 15) of different groups of the commutator (13).

8. The motorized wheel, according to Claim 1, **characterized** in that the electric magnets (6, 7) of the stator (4) in any group and the magnetic elements (12) of the rotor (10) are disposed around a circumference so that the angular distance between the axes (43) of any two electric magnets of the stator (4) of one group and the axes (44) of any two magnetic elements (12) of the rotor (10) is multiple to the angular distance $\alpha$ ; any two electric magnets (6, 7) of one group and any two magnetic elements (12) have opposite polarity at an angular distance between their axes (43, 44) equal to the odd number of angular distances $\alpha$ and have the same polarity at an even number of angular distance $\alpha$ ; when the slip element (17, 18) of the current collector (8) of the respective group of electric magnets (6) are in one of the positions between the bars (14, 15) of the commutator (13), the axes (43) of the electric magnets (6) of this group coincide with the axes (44) of the magnetic elements (12) of the rotor (10), while the electric magnets (7) of at least one other group are electrically connected to the controlled voltage unit (32) and their axes (43) are displaced relative to the axes (44) of the magnetic elements (12), in which case $\alpha = 360°/N$, where N is a natural number, which is even.

9. The motorized wheel, according to Claim 1 or 8, **characterized** in that the electric magnets (6,7) in any group are disposed uniformly with poles alternating along the periphery of the magnetic circuit (11) of the rotor (10), while an even number of magnetic elements (12) with alternating poles are disposed along a circumference; the bars (14,15) of the commutator (13) are distributed uniformly along a circumference and their number is equal to that of the magnetic elements (12), in which case $\alpha = 360°/M$, where M is the number of magnetic elements (12) of the rotor (10).

10. The motorized wheel, according any Claim 1 or 3, **characterized** in that it is provided with a an electric energy accumulator (69), while at least one commutator (13, 71) has intermediate bars (67, 74), each bar being located between two adjacent bars (14, 15 or 72, 73) of the commutator (13, 71) and electrically and alternately connected to each other, forming two groups of electrically connected intermediate bars (67, 74) of the commutator (13, 71), in which case, with a contact of the slip element (18 or 19) of the current collector corresponding to the group of electric magnets (6 or 7) with the intermediate bar (67 or 74), the electric magnets (6 or 7) of this group have additional electric connection with the electric energy accumulator (69) through the slip element (18 or 19) of the respective current collector (8 or 9) and the additional current collector (22), the group of intermediate bars (67 or 74) of the commutator (13, 71) and the contact element (21).

11. The motorized wheel, according to Claims 1 and 10, **characterized** in that installed on different parts of the electric motor are at least one energy recovery current collector (64) with at least one slip element (65) and at least one slip-ring slip contact (66) interacting with the slip element (65) of the energy recovery current collector (64), the slip element (65) of the energy recovery current collector (64) and the slip-ring contact (66) being inserted into the additional circuit of the electric magnets (6, 7) and electric energy accumulator (69).

12. The motorized wheel, according to Claim 1, **characterized** in that the commutator (13) is mounted on the rotor (10) while the current collectors (8, 9), each having two slip elements (17-20), are mounted on the stator (4).

13. The motorized wheel, according to Claim 12, **characterized** in that the contact element (21) is mounted on the rotor (10) and electrically connected to one group of bars (14) of the commutator (13), while the slip element (23) of the additional current collector (22) mounted on the stator (4) is electrically connected to the output (31) of the controlled voltage unit (32), while the grounding output (42) of this unit is electrically connected to the second group of bars (15) of the commutator (13), in which case the slip elements (17-20) of each current collector (8, 9) are electrically connected to the outputs (29, 30) of the electric magnets (6, 7) of the corresponding group.

14. The motorized wheel, according to Claim 4 and any Claim 12 or 13, **characterized** in that the controlled winding switching unit (45) is inserted in the electric circuit of the slip elements (17-20) and electric magnets (6, 7), in which case, every input (50, 51) of the controlled winding switching unit (45) is connected to the corresponding slip element (17 or 18, or 19, or 20) of the respective current collector (8,9).

15. The motorized wheel, according to Claims 5 and 15, **characterized** in that the controlled voltage switch (46) is inserted in the electric circuit of the slip elements (17-20) and controlled winding switching unit (45); each control input (6) of the controlled voltage switch (46) is electrically connected to the corresponding slip element (17-20) of the respective current collector (8,9), while each output (59) of the controlled voltage switch (46) is electrically connected to the corresponding input (50,51) of the controlled winding switching unit (45).

16. The motorized wheel, according to Claim 11 and any Claim 12, 13, 14, **characterized** in that the slip-ring contact (66) is mounted on the rotor (10) and is connected to one group of intermediate bars (67) of the commutator (13); the slip element (65) of the energy recovery current collector (64) mounted on the stator (4) is connected to one output (70) of the electric energy accumulator (69) whose grounding output (42) is electrically connected to the intermediate bars (67) of the other group.

17. The motorized wheel, according to Claims 1 and 3, **characterized** in that when the commutator (13, 71) and contact element (21) are mounted on the stator (4), the number of commutator (13, 71) mounted on the stator (4) is made equal to the number of groups of the electric magnets (6, 7); the current collector (8,9) are provided with two slip elements (17-20); the slip elements (17, 18 and 19,20) of the current collector (8,9) corresponding to the groups of electric magnets (6,7) are in contact with bars (72,73 and 14,15) of the respective commutator (71 or 13); the additional current collector (22) is mounted on the rotor (10); the first slip element (18, 19) of all current collectors is electrically connected to the slip elements (23) of the additional current collector (22), while their second elements (17, 20) are electrically connected to the grounding output (42) of the controlled voltage unit (32) whose other output (31) is connected to the contact element (21); the leads (29, 30) of the electric magnets (6, 7) of the groups are electrically connected to the bars (14, 15 and 72, 73) of the respective commutator (13, 71).

18. The motorized wheel, according to Claims 4 and 17, **characterized** in that the controlled winding switching unit (45) is inserted in the circuit of the electric magnets (6, 7) and groups of bars (14, 15 and 72, 73) of the commutator (13, 71), the inputs (50, 51) of the controlled winding switching unit (45) being connected to the groups of bars (14, 15 and 72, 73) of the respective commutator (13 and 71).

19. The motorized wheel, according to Claim 1, **characterized** in that the magnetic elements (12) and electric magnets (6, 7) are installed so that their axes (43, 44) are arranged in parallel to the axle (1) of the wheel.

20. The motorized wheel, according to Claim 1, **characterized** in that the magnetic elements (12) and electric magnets (6, 7) are installed so that their axes (43, 44) are arranged in parallel to the axle (1) of the wheel.

21. The motorized wheel, according to Claim 1, **characterized** in that the stator (4) is provided with at least one second magnetic circuit (80), in which case, at least one group of electric magnets (6, 7) is arranged on each magnetic circuit (5, 80) of the stator (4).

22. The motorized wheel, according to Claim 1, **characterized** in that at least one commutator (13, 71) is made with a possibility of angular displacement relative to the part of the electric motor, on which it is installed.

23. The motorized wheel, according to Claim 1, **characterized** in that at least one current collector (8,9,22,64) is made with a possibility of angular displacementrelative to the part of the electric motor, on which it is installed.

24. The motorized wheel, according to Claim 1, **characterized** in that the rotor (10) is provided with at least one second magnetic circuit (82) with magnetic elements (12).

25. The motorized wheel, according to Claim 1 or 5, or 6, **characterized** in that the controlled voltage unit (32) has a power supply input (78) to be connected to any external voltage source.

26. A vehicle, characterized in that it is provided with at least one motorized wheel made according to any above Claims 1-25.

FIG. 1

FIG. 2

FIG. 3

FIG. 4

EP 0 507 967 A1

FIG. 5

EP 0 507 967 A1

FIG. 6

22

FIG. 7

FIG. 8

FIG. 9

FIG. 10

EP 0 507 967 A1

FIG. 11

FIG. 12

FIG. 13

FIG. 14

FIG. 15

FIG. 16

# INTERNATIONAL SEARCH REPORT

**I. CLASSIFICATION OF SUBJECT MATTER** (if several classification symbols apply, indicate all) *

According to International Patent Classification (IPC) or to both National Classification and IPC

Int. Cl.$^5$ : B60K 7/00; B60L 9/02

**II. FIELDS SEARCHED**

| Minimum Documentation Searched [7] | |
|---|---|
| Classification System | Classification Symbols |
| Int. Cl.$^5$ | B60K 7/00; B60L 9/02, 9/10, 15/04, 15/20 |

Documentation Searched other than Minimum Documentation
to the Extent that such Documents are Included in the Fields Searched [8]

**III. DOCUMENTS CONSIDERED TO BE RELEVANT [9]**

| Category * | Citation of Document, [11] with indication, where appropriate, of the relevant passages [12] | Relevant to Claim No. [13] |
|---|---|---|
| A | US, A, 2581551 (G.M. MYRMIRIDES), 8 January 1952 (08.01.52) | 1-26 |
| A | US, A, 3012178 (ARTHUR M. BARRETT·), 5 December 1961, (05.12.61) | 1-26 |
| A | US, A, 3055448 (R. FAGEL), 25 September 1962 (05.09.62) | 1-26 |
| A | US, A, 3704759 (EMIL SLAVCHEV VITKOV et al.) 5 December 1972 (05.12.72) | 1-26 |
| A | US, A, 3937293 (ROMAN SUSDORF) 10 February 1976 (10.02.76) | 1-26 |
| A | US, A, 4498551 (DOMINIC S. ARBISI), 12 February 1985 (12.02.85) | 1-26 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 14 January 1992 (14.01.92) | 19 February 1992 (19.02.92) |
| International Searching Authority | Signature of Authorized Officer |
| ISA/SU | |

Form PCT/ISA/210 (second sheet) (January 1985)